# EUROPÄISCHE PATENTANMELDUNG

(11) **EP 1 769 700 A1**
(43) Veröffentlichungstag der Anmeldung: **04.04.2007**
(21) Anmeldenummer: 06016601.4
(22) Anmeldetag: 09.08.2006
(51) Int. Cl.: A47B 13/08, A47B 95/04, A47B 96/20, E04F 13/06

(54) **Bauplatte und Verfahren zu ihrer Herstellung**

(30) Priorität: 28.09.2005 DE 102005046294
(71) Anmelder: REHAU AG + Co, 95111 Rehau (DE)
(72) Erfinder: Bauer, Dieter, 95213 Münchberg (DE); Ruffert, Nikolaus, 31832 Springe (DE)

(57) **Zusammenfassung**

Die Erfindung betrifft eine Bauplatte mit einer Stoßkante, insbesondere Spanplatte, Faserplatte oder dergleichen, Holzwerkstoffplatte bzw. aus Ersatzstoffen hergestellte Bauplatte, wobei die Stoßkante in Form eines Umleimers aus thermoplastischem Material ausgebildet ist. Die Erfindung hat sich die Aufgabe gestellt, eine mit einer Stoßkante versehene Bauplatte und ein Verfahren zu ihrer Herstellung anzugeben, wobei die Nachteile der bekannten Lösung aus dem Stand der Technik überwunden werden und insbesondere eine Einsparung von Material der Stoßkante sowie eine schnellere und bessere Anbringung an den Schmalseiten der Bauplatten erzielbar ist.

Erfindungsgemäß wird dies dadurch gelöst, dass an der Bauplatte an wenigstens einer ihrer Schmalseiten, auf denen eine Stoßkante in Form eines Umleimers aufbringbar ist, eine feststehende, den Umleimer aufnehmende zwangsführende und/oder zentrierende

Feder angeformt ist und der Umleimer eine mit der Feder der Bauplatte korrespondierende Nut aufweist. Weiterhin wird ein Verfahren zur Herstellung einer mit einer Stoßkante versehenen Bauplatte beschrieben.

## Beschreibung

Die Erfindung betrifft eine mit einer Stoßkante versehene Bauplatte sowie ein Verfahren zur Herstellung einer solchen Bauplatte.

Als Bauplatten im Sinne der Erfindung werden beispielsweise Möbelbauplatten, als Tisch- oder Arbeitsplatten, Türplatten, Wand- bzw. Deckenverkleidungsplatten angesehen, deren Stirnflächen zumindest im Sichtbereich mit einer Stoßkante, beispielsweise in Form eines Umleimers aus thermoplastischem Kunststoff, versehen sind.

In der DE 9114672 U1 ist eine für Möbelbauplatten bestimmte Randleiste beschrieben, die eine entlang der Ansichtsfläche verlaufende nasenförmige Kante aufweist, welche über die sich daran anschließende Oberfläche hinaussteht und nur diese überstehende Kante bündig zur Oberfläche der Möbelbauplatte abgeschliffen ist. Dabei sind in die Möbelbauplatte zwei Nuten eingefräst, in welche die an der Rückseite der Randleisten angebrachten Federprofile beim Anbringen der Randleiste eingreifen.

Mit der in der DE 29802242 U1 offenbarten technischen Lösung für eine Möbelbauplatte, bei der die Grundplatte im Bereich der Stirnseite unterhalb der Deckschicht der Möbelbauplatte eine Hinterfräsung aufweist, die Deckschicht stegartig freigestellt ist und der Umleimer mit seiner Oberseite unter dem überstehenden Steg der Deckschicht angeordnet ist, soll versucht werden, die Nachteile welche der technischen Lösung gemäß der DE 9114672 U1 eigen sind - die erforderlichen Endbearbeitungsschritte der Kantenbearbeitung der Umleimer und der entstehende optische Gesamteindruck lässt die Möbelbauplatte sofort als Spanplatte erkennen, sowie die bei einer schlecht verleimten Randleiste bestehende Gefahr, dass in die senkrechte Klebefuge zwischen der Möbelbauplatte und dem Umleimer Feuchtigkeit eindringen kann, so dass beispielsweise das Holz der Möbelbauplatte aufquillt - überwunden werden.

Als Nachteil bei dieser Art der Anbringung der Umleimer ist jedoch zu nennen, dass eine sehr hohe Genauigkeit beim Fräsen der Kontur für die Aufnahme des Umleimers erforderlich ist und dass eine sehr scharfkantige Ecke im oberen Verbindungsbereich von Deckschicht und Umleimer entsteht, so dass ein sogenanntes Softline-Profil hiermit nicht realisierbar ist. Ein weiterer Nachteil wird darin gesehen, dass durch diese scharfkantige Ecke eine Kerbwirkung entsteht, die in der weiteren Fertigung der Möbelbauplatte zum Abbrechen dieser dünnen Deckschicht und somit zum Zerstören der Möbelbauplatte führen.

Die DE 19940329 A1 offenbart ein Verfahren zum Befestigen von Deckleisten aus thermoplastischem Kunststoff auf den Schmalseiten von Möbelbauplatten. Die Deckleisten werden unmittelbar auf die Schmalseiten aufgebracht und mit den Schmalseiten in einen adhäsiven Verbund gebracht. Die dabei verwendeten Deckleisten haben einen beidseitigen Überstand in Bezug auf die jeweilige Schmalseite der Möbelbauplatte, wobei diese Überstände zur Fugenversiegelung aufgeschmolzen werden und in einem folgenden Arbeitsgang das aufgeschmolzene Deckleistenmaterial unter Erzeugung von mit den Schmalseiten deckungsgleichen Deckleisten entfernt wird.

Ein Nachteil wird darin gesehen, dass zwischen der Möbelbauplatte und der adhäsiv angebrachten Deckleiste keine formschlüssige Verbindung vorhanden ist. Ferner ist es von Nachteil, dass bei dem vollflächigen Aufbringen eines in der Breite größeren überstehenden Umleimers und dem anschließenden Nachbearbeiten beispielsweise durch Fräsen auf die entsprechende Kontur ein recht hoher Material- und Zeiteinsatz erforderlich ist. Umleimer mit annähernd rechteckigem Querschnitt müssen sehr präzise beim Aufleimen auf die Schmalseiten von Möbelbauplatten und dergleichen geführt sein.
Schon geringe Abweichungen in Längs- bzw. Querrichtung führen dazu, dass die Flächen der Schmalseiten der Bauplatten nicht vollständig abgedeckt sind. Um diesen Nachteil zu vermeiden, ist man dazu übergegangen, die Breite der Umleimer größer als die Dicke der Schmalseiten der Bauplatten auszuführen und nach dem Verbinden der Umleimer über einen adhäsiven Verbund beispielsweise durch Kleben die ober- und unterseitig über die Dicke der Schmalseite der Bauplatte überstehenden Umleimerreste durch beispielsweise Abfräsen bzw. Polieren zu entfernen. Die dabei benötigten Überstände in der Breite der Umleimer betragen je nach Anwendungsfall mehrere Millimeter, wodurch sich zwangsläufig der Materialaufwand für den Umleimer aber auch die erforderliche Nacharbeitszeit wesentlich erhöht.

Bei derartigen Umleimern kommt es somit zu einem höheren Materialeinsatz und zu einer höheren Abfallentwicklung bei der Verarbeitung auf den an sich bekannten Anleimmaschinen. Weiterhin neigen derartige Umleimer zum "Schlüsseln", was zu breiteren Leimfugen führt.

Der vorliegenden Erfindung liegt somit die Aufgabe zugrunde eine mit einer Stoßkante versehene Bauplatte und ein Verfahren zu ihrer Herstellung anzugeben, wobei die Nachteile der bekannten Lösungen aus dem Stand der Technik überwunden werden und insbesondere eine Einsparung von Material der Stoßkante sowie eine schnellere und bessere Anbringung an den Schmalseiten der Bauplatten erzielbar ist.

Erfindungsgemäß wird diese Aufgabe durch die kennzeichnenden Merkmale des Anspruches 1 und das Verfahren nach Anspruch 8 gelöst.
Weitere vorteilhafte Ausgestaltungen sind in den Unteransprüchen beschrieben.

Die Erfindung ist dadurch gekennzeichnet, dass an den Bauplatten auf wenigstens einer ihrer Schmalseiten, auf denen eine Stoßkante in Form eines Umleimers aufbringbar ist, eine feststehende, den Umleimer aufnehmende, zwangsführende und/oder zentrierende Feder angeformt ist und der Umleimer eine mit der Feder der Bauplatte korrespondierende Nut aufweist. Somit ist vorteilhafterweise eine schnelle und präzise Anbringung der Umleimer an den Schmalseiten der Bauplatten möglich, wobei insbesondere bei den Umleimern Materialeinsparungen realisiert werden können.

In einer weiteren vorteilhaften Ausbildung steht die Feder der Bauplatte mit der Nut des Umleimers in Wirkverbindung, so dass eine ausreichende Haftfestigkeit des Umleimers an der Schmalseite der Bauplatte auch mit geringeren Mengen an beispielsweise Klebstoffsystemen realisierbar ist.

Die Nut des Umleimers kann dabei vorteilhafterweise halbkreisförmig, prismatisch, trapezförmig und dergleichen ausgebildet sein, so dass die Ausbildung der Nut entsprechend der geforderten Haftfestigkeit des Umleimers und dem Material der Bauplatte dimensionierbar ist.

In einer weiteren vorteilhaften Ausgestaltung weist die Feder der Schmalseite der Bauplatte eine Breite von ca. 20 bis 90 % der Dicke der Bauplatte auf, bevorzugt 25 bis 60 %.

Somit ist es vorteilhafterweise bei verschiedenen Dicken von Bauplatten jederzeit möglich, unterschiedlich dimensionierte Umleimer mit ausreichender Haftfestigkeit an den Schmalseiten der Bauplatten anzubringen.
In einer weiteren vorteilhaften Ausgestaltung weist die Höhe der Feder der Bauplatte etwa 5 bis 90 % der Dicke des Umleimers auf, bevorzugt 35 bis 70 %. Es ist erfindungsgemäß möglich, eine den entsprechenden Normen und Anforderungen genügende Haftfestigkeit über die Wirkverbindung der Feder der Bauplatte mit der Nut des Umleimers zu realisieren.

In einer weiteren ebenfalls vorteilhaften Ausgestaltung weist die Feder eine zum Korpus der Bauplatte weisende Hinterschneidung auf, so dass der Umleimer mit einer in der Geometrie zur Feder korrespondierende Nut auf die Feder aufbringbar ist, ohne dass zusätzliche Klebstoffsysteme verwendet werden müssen. Es liegt jedoch auch im Rahmen der Erfindung, ein Dichtmittel in die Fuge einzubringen.

Bei der erfindungsgemäßen Bauplatte weist die Breite des Umleimers zwischen dem Umleimer und der Schmalseite der Bauplatte einen Überstand über die Dicke der Bauplatte auf, der jedoch zum bekannten Stand der Technik als sehr klein und geringfügig dimensionierbar ist, so dass an sich bekannte Nacharbeiten schnell, kostengünstig und mit sehr geringen Abfallentwicklungen realisierbar sind.

Das erfindungsgemäße Verfahren zur Herstellung einer Bauplatte mit einer Stoßkante wobei die Stoßkante mit der Schmalseite der Bauplatte verbunden wird und wobei das Anbringen des als Stoßkante ausgebildeten Umleimers aus thermoplastischem Material an den Schmalseiten der Bauplatte erfolgt, ist durch folgende Verfahrensschritte gekennzeichnet:
- In einem ersten Schritt wird an den Schmalseiten der Bauplatte eine feststehende Feder angearbeitet
- In einem zweiten Verfahrensschritt wird ein Umleimer, der auf seiner zur Schmalseite der Bauplatte weisenden Seite eine mit der Feder der Bauplatte korrespondierende Nut aufweist, aufgebracht und mit der Schmalseite der Bauplatte in Verbund gebracht
- In einem dritten Verfahrensschritt wird der Überstand des auf die Schmalseiten der Bauplatte aufgebrachten Umleimers in einer vorgegebenen Kontur abgearbeitet

Das Aufbringen des Umleimers auf die Schmalseite der Bauplatte erfolgt somit nach einem bewährten Nutfederprinzip, welches einfach bzw. kostengünstig realisierbar ist und zu ausreichenden Haftfestigkeiten des Umleimers an der Schmalseite der Bauplatte führt.

In einer weiteren vorteilhaften Ausgestaltung wird auf die der Schmalseite der Bauplatte gegenüberliegenden Seite des Umleimers ein Klebstoffsystem aufgebracht, welches die Haftfestigkeit durch einen adhäsiven Verbund noch steigert.
In einer weiteren ebenfalls vorteilhaften Ausgestaltung wird das Klebstoffsystem in die Nut des Umleimers eingebracht, so dass eine ausreichende Haftfestigkeit des Umleimers an der Schmalseite der Bauplatte bei reduziertem Klebstoffsystemverbrauch realisierbar ist. Ein weiterer Vorteil wird darin gesehen, dass keine Reste des Klebstoffsystemes an der Fuge zwischen dem Umleimer und der Schmalseite der Bauplatte heraustreten können.

Weiterhin vorteilhaft wird gesehen, dass ein Klebstoffsystem auf die der Nut benachbarten Bereiche des Umleimers aufgebracht wird, so dass auch hier eine ausreichende Haftfestigkeit des Umleimers an der Schmalseite der Bauplatte bei reduziertem Klebstoffsystemverbrauch möglich ist.
In einer weiteren vorteilhaften Ausgestaltung ist das Klebstoffsystem auf die Schmalseite der Bauplatte aufgebracht, wodurch der nachfolgend aufzubringende Umleimer schnell und ohne zusätzliche Klebstoffaktivierung fixierbar ist.
Das Klebstoffsystem an der Schmalseite der Bauplatte kann sowohl auf der Feder als auch in den Bereichen neben der Feder angeordnet sein, so dass sich ein insgesamt reduzierter Klebstoffsystemverbrauch ergibt.

Die Erfindung soll nun an einem diese nicht einschränkenden Ausführungsbeispiel näher beschrieben werden.

Es zeigt:

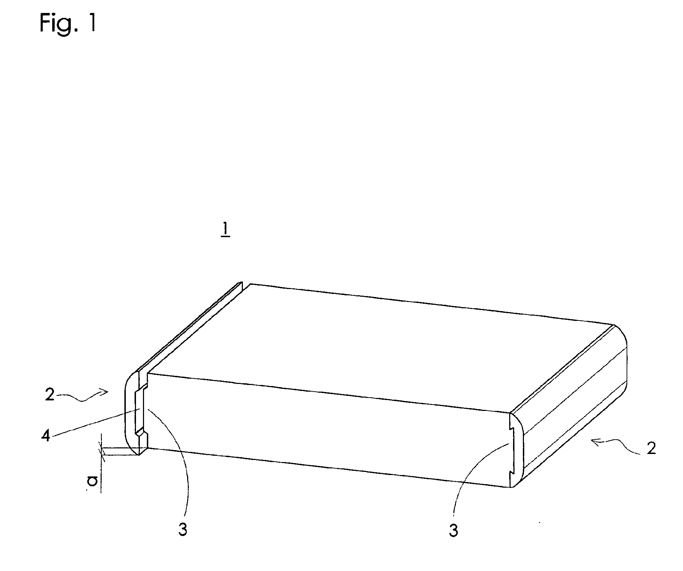

Figur 1 - Perspektivische Darstellung einer Bauplatte

In Figur 1 ist eine Bauplatte 1 dargestellt, welche in diesem Ausführungsbeispiel als Holzwerkstoffplatte ausgebildet ist. Es liegt jedoch auch im Rahmen der Erfindung, dass die Bauplatte 1 als Spanplatte, Faserplatte bzw. Möbelbauplatte ausgebildet ist.

An zwei gegenüberliegenden Schmalseiten der Möbelbauplatte 1 ist eine Feder 3 angebracht. An der linken Seite der Möbelbauplatte 1 ist der Schmalseite gegenüberliegend ein Umleimer 2 angeordnet, welcher eine Nut 4 aufweist. Der Umleimer 2 ist so ausgebildet, dass er einen Überstand a aufweist, so dass die Breite des Umleimers 2 geringfügig größer ist als die Dicke der Schmalseite der Bauplatte 1. Die an der Schmalseite der Bauplatte 1 angearbeitete Feder 3 ist in diesem Ausführungsbeispiel trapezförmig ausgebildet und korrespondiert mit einer ebenfalls etwa trapezförmig ausgebildeten Nut 4 des Umleimers 2. Das Anbringen des Umleimers 2 an der Schmalseite der Bauplatte 1 ist durch eine Zentrierung bzw. Zwangsführung über die in Wirkverbindung stehende Feder 3 der Bauplatte 1 mit der Nut 4 des Umleimers 2 schnell und problemlos möglich, wobei ein adhäsiver Verbund zwischen dem Umleimer 2 und der Schmalseite der Bauplatte 1 über ein in der Nut 4 angeordnetes Klebstoffsystem erfolgt. Nach dem Aufbringen des Umleimers 2 an die Schmalseite der Bauplatte 1 erfolgt eine Nacharbeit in Form der Abarbeitung des Überstandes a an den Längsseiten des Umleimers 2.

An der rechten Seite der Bauplatte 1 ist ein Umleimer 2 angeordnet, der an seinen Längsseiten bereits nachbearbeitet wurde. Die Bauplatte 1 weist an ihrer rechten Seite eine Feder 3 auf, welche zum Korpus der Bauplatte 1 eine Hinterschneidung aufweist. Der Umleimer 2 weist eine Nut 4 auf, welche zur Feder 3 der Schmalseite der Bauplatte 1 korrespondiert. Der Umleimer 2 kann somit über das Nutfederprinzip mit der Schmalseite der Bauplatte 1 in Wirkverbindung gebracht werden, so dass der Umleimer 2 ohne zusätzliche Klebstoffsysteme an der Schmalseite der Bauplatte 1 befestigbar ist. In diesem Ausführungsbeispiel weist die Feder 3 der Bauplatte 1 eine Breite von ca. 60 % der Dicke der Bauplatte 1 auf.

Das Aufbringen eines Umleimers 2 an die Schmalseite einer Bauplatte 1 erfolgt in einem ersten Verfahrensschritt, indem an den Schmalseiten der Bauplatte 1 eine feststehende Feder 3 angearbeitet wird. In einem zweiten Verfahrensschritt wird ein Umleimer 2, der auf seiner zur Schmalseite der Bauplatte 1 weisenden Seite eine mit der Geometrie der Feder 3 korrespondierenden Nut 4 aufweist, aufgebracht und mit der Schmalseite der Bauplatte 1 in Verbund gebracht. Dieser Verbund kann sowohl stoffschlüssig als auch kraftschlüssig erfolgen. In einem dritten Verfahrensschritt wird der über die Dicke der Schmalseiten der Bauplatte 1 überstehende Überstand a des Umleimers 2 in einer vorgegebenen Kontur abgearbeitet, so dass die Breite des Umleimers 2 in etwa der Dicke der Schmalseite der Bauplatte 1 entspricht. Dies kann durch an sich bekanntes Fräsen bzw. Polieren erfolgen, wobei die Schmalseiten des Umleimers 2 eine beispielsweise halbrunde Kontur erhalten.

Es liegt aber auch im Rahmen der Erfindung, dass der Umleimer 2 so dimensioniert ist, dass eine kraftschlüssige Verbindung der Nut 4 des Umleimers 2 mit der Feder 3, die eine zum Korpus der Bauplatte 1 weisende Hinterschneidung aufweist, ohne Klebstoffsysteme und ohne Nachbearbeitung der Randbereiche möglich ist.

## Patentansprüche

1. Bauplatte mit einer Stoßkante, insbesondere Spanplatte, Faserplatte oder dergleichen Holzwerkstoffplatte bzw. aus Ersatzstoffen hergestellte Bauplatte, wobei die Stoßkante in Form eines Umleimers aus thermoplastischem Material ausgebildet ist, **dadurch gekennzeichnet, dass** an der Bauplatte (1) auf wenigstens einer ihrer Schmalseiten, auf denen eine Stoßkante in Form eines Umleimers (2) aufbringbar ist, eine feststehende den Umleimer (2) aufnehmende zwangsführende und/oder zentrierende Feder (3) angeformt ist und der Umleimer (2) eine mit der Feder (3) der Bauplatte (1) korrespondierende Nut (4) aufweist.

2. Bauplatte nach Anspruch 1, **dadurch gekennzeichnet, dass** die Feder (3) der Bauplatte (1) mit der Nut (4) des Umleimers (2) in Wirkverbindung steht.

3. Bauplatte nach Anspruch 1 bis 2, **dadurch gekennzeichnet, dass** die Feder (3) halbkreisförmig, prismatisch, trapezförmig und dergleichen ausgebildet ist.

4. Bauplatte nach Anspruch 1 bis 3, **dadurch gekennzeichnet, dass** die Feder (3) eine Breite von etwa 20 % bis 90 % der Dicke der Bauplatte (1) aufweist, bevorzugt 25 % bis 60 %.

5. Bauplatte nach Anspruch 1 bis 4, **dadurch gekennzeichnet, dass** die Feder (3) der Bauplatte (1) eine Höhe von etwa 5 % bis 90 % der Dicke des Umleimers (2) aufweist, bevorzugt 35 % bis 70 %.

6. Bauplatte nach Anspruch 1 bis 5, **dadurch gekennzeichnet, dass** die Feder (3) eine zum Korpus der Bauplatte (1) weisende Hinterschneidung aufweist.

7. Bauplatte nach Anspruch 1 bis 6, **dadurch gekennzeichnet, dass** die Breite des Umleimers (2) um einen Überstand (a) über die Dicke der Bauplatte (1) übersteht.

8. Verfahren zur Herstellung einer mit einer Stoßkante versehenen Bauplatte, wobei die Stoßkante mit der Schmalseite der Bauplatte verbunden wird und wobei das Anbringen des als Stoßkante ausgebildeten Umleimers aus thermoplastischem Material an den Schmalseiten der Bauplatte erfolgt, **dadurch gekennzeichnet,**
- **dass** in einem ersten Schritt an den Schmalseiten der Bauplatte (1) eine feststehende Feder (3) angearbeitet wird
- **dass** in einem zweiten Schritt ein Umleimer (2), der auf seiner zur Schmalseite der Bauplatte (1) weisenden Seite eine mit der Geometrie der Feder (3) korrespondierende Nut (4) aufweist, aufgebracht und mit der Schmalseite der Bauplatte (1) in Verbund gebracht wird
- **dass** in einem dritten Schritt der Überstand (a) des auf die Schmalseiten der Bauplatte (1) aufgebrachten Umleimers (2) in einer vorgegebenen Kontur abgearbeitet wird.

9. Verfahren nach Anspruch 8, **dadurch gekennzeichnet, dass** der Umleimer (2) mit der Schmalseite der Bauplatte (1) in einen kraftschlüssigen Verbund gebracht wird.

10. Verfahren nach Anspruch 8, **dadurch gekennzeichnet, dass** der Umleimer (2) in einen stoffschlüssigen Verbund, vorzugsweise einen adhäsiven Verbund mit der Schmalseite der Bauplatte (1) gebracht wird.

11. Verfahren nach Anspruch 8, und 10 **dadurch gekennzeichnet, dass** auf die der Schmalseite der Bauplatte (1) weisenden Seite des Umleimers (2) ein Klebstoffsystem aufgebracht wird.

12. Verfahren nach Anspruch 11, **dadurch gekennzeichnet, dass** das Klebstoffsystem in die Nut (4) des Umleimers (2) eingebracht wird.

13. Verfahren nach Anspruch 11, **dadurch gekennzeichnet, dass** das Klebstoffsystem auf die der Nut (4) benachbarten Bereiche des Umleimers (2) aufgebracht wird.

14. Verfahren nach Anspruch 10, **dadurch gekennzeichnet, dass** das Klebstoffsystem auf die Schmalseite der Bauplatte (1) aufgebracht wird.
